(19) Europäisches Patentamt
European Patent Office
Office européen des brevets

(11) Veröffentlichungsnummer : **0 021 071**
**B1**

(12) # EUROPÄISCHE PATENTSCHRIFT

(45) Veröffentlichungstag der Patentschrift : **09.03.83**

(51) Int. Cl.³ : **C 09 D 3/49**, C 08 L 63/00, C 09 D 5/40, C 25 D 13/06

(21) Anmeldenummer : **80102935.6**

(22) Anmeldetag : **27.05.80**

(54) **Wässerige Dispersion und deren Verwendung zur kathodischen Elektrotauchlackierung.**

(30) Priorität : **11.06.79 DE 2923589**

(43) Veröffentlichungstag der Anmeldung : **07.01.81 Patentblatt 81/01**

(45) Bekanntmachung des Hinweises auf die Patenterteilung : **09.03.83 Patentblatt 83/10**

(84) Benannte Vertragsstaaten : **AT BE CH DE FR GB IT LI NL SE**

(56) Entgegenhaltungen :
**GB A 1 407 410**
**US A 4 134 932**

**Die Akte enthält technische Angaben, die nach dem Eingang der Anmeldung eingereicht wurden und die nicht in dieser Patentschrift enthalten sind.**

(73) Patentinhaber : **BASF Farben + Fasern Aktiengesellschaft
Am Neumarkt 30
D-2000 Hamburg 70 (DE)**

(72) Erfinder : **Streitberger, Hans-Joachim, Dr.
Melcherstrasse 43
D-4400 Münster (DE)**
Erfinder : **Lessmeister, Peter, Dr.
Beethovenstrasse 6
D-4400 Münster (DE)**
Erfinder : **Zdahl, Norbert
Schüttwall 35
D-4715 Ascheberg (DE)**

(74) Vertreter : **Habbel, Hans-Georg, Dipl.-Ing.
Postfach 3429 Am Kanonengraben 11
D-4400 Münster (DE)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Wäßrige Dispersion und deren Verwendung zur kathodischen Elektrotauchlackierung

Die Erfindung bezieht sich auf eine wäßrige Dispersion aus feinteiligen Kunststoffen. Sie ist geeignet als Elektrotauchbad zum Herstellen von Überzügen auf elektrisch leitfähigen Substraten, die in einem Elektrotauchlackierverfahren als Kathode geschaltet sind.

Wäßrige Kunststoff-Dispersionen, die eine Verfilmung unter Wärmeeinfluß oder eine Vernetzung bewirken, sind bekannt. Sie ergeben nach den üblichen Auftragsmethoden des Streichens, Tauchens und Spritzens einwandfreie gebrauchstüchtige Überzüge.

Die Aufgabe der vorliegenden Erfindung war es, wäßrige Dispersionen aus feinteiligem Kunststoff auch in einem Elektrotauchlackierverfahren als Elektrotauchbad einsetzen zu können, wobei das zu beschichtende Substrat während des Gleichstromdurchganges als Kathode geschaltet ist und das Tauchbad einen pH-Wert zwischen 7 und 9 besitzt. Die üblichen kationischen Systeme, mit denen die als Kathode geschalteten elektrisch leitfähigen Substrate in einem Elektrotauchlackierverfahren unter Anlegen eines Gleichstromes oder Wechselstromes beschichtet werden können, besitzen einen Bad-pH-Wert, der weit unter 7 liegt. Ein niedriger pH-Wert resultiert aus der Neutralisation des kationischen Harzes mit Säure. Die Folge eines pH-Wertes im sauren Bereich ist eine verstärkte Korrosion der Anlage in der flüssigen und gasförmigen Phase.

Die zur Dispergierung einschließlich Neutralisation verwendete Säure liegt je nach dem pH-Wert des Elektrotauchbades verschieden stark dissoziiert vor. Der undissoziierte Teil ist bei niedrigem Bad-pH-Wert größer und je nach Dampfdruck der Säure und je nach Bad-Temperatur führt dieser Anteil mehr oder weniger stark zu dem korrosiven Angriff auf das Anlagematerial in der flüssigen und in der gasförmigen Phase.

Die Aufgabe wurde überraschenderweise gelöst durch eine wäßrige Dispersion auf der Basis eines mit Säuren protonisierten Reaktionsproduktes von

a) epoxidgruppenfreien Mannich-Basen aus

($a_1$) äthergruppenfreien kondensierten Phenolen mit mindestens zwei aromatischen Ringen und mindestens zwei phenolischen Hydroxylgruppen und/oder

($a_2$) äthergruppenhaltigen kondensierten Phenolen mit mindestens zwei aromatischen Ringen und mindestens einer phenolischen Hydroxylgruppe,

($a_3$) sekundären Aminen mit mindestens einer Hydroxyalkylgruppe, gegebenenfalls im Gemisch mit

($a_4$) sekundären Dialkyl- oder Dialkoxyalkylaminen ohne freie Hydroxylgruppen,

($a_5$) Formaldehyd oder Formaldehyd abspaltende Verbindungen

mit

b) Epoxidharzen, wobei aus (a) und/oder (b) stammende aliphatische Hydroxylgruppen gegebenenfalls durch Umsetzung mit teilblockierten Isocyanaten mindestens teilweise in Urethangruppen überführt sind, die dadurch gekennzeichnet ist, daß sie zusätzlich feinteilige nicht ionische Kunststoffe eindispergiert enthält.

Bevorzugt geeignet sind solche wäßrigen Dispersionen, die Pigmente und/oder Füllstoffe und/oder solche wassermischbare organische Lösungsmittel enthalten, die die feinteiligen Kunststoffe weder anlösen noch anquellen.

Die feinteiligen nicht ionischen Kunststoffe können in einer besonders bevorzugten Ausführungsform der Erfindung bereits Pigmente und/oder Füllstoffe enthalten.

Gegenstand der Erfindung ist ferner die Verwendung der erfindungsgemäßen wäßrigen Dispersion zum Herstellen von Überzügen auf der Oberfläche von als Kathode geschalteten elektrisch leitfähigen Substraten durch kathodische Abscheidung aus einem Tauchbad in einem kathodischen Elektrotauchlackierverfahren und anschließendes Einbrennen des Überzugs.

Aus den erfindungsgemäßen waßrigen Dispersionen lassen sich sowohl die feinteiligen nicht ionischen Kunststoffe als auch das Reaktionsprodukt aus Mannich-Basen und Epoxidharzen gleichmäßig bei einem pH-Wert von über 7 kathodisch abscheiden und ergeben nach kurzer Beschichtungszeit Überzüge bis zu 150 µm mit hervorragenden mechanischen Eigenschaften nach dem Einbrennen, wie große Härte und Kratzfestigkeit bei guter Elastizität und fester Haftung auf dem Substrat.

Nach dem Einbrennen bei Temperaturen bis zu 200 °C während einer Einbrenndauer von etwa 15 Minuten besitzen die Überzüge einen außerordentlich guten Korrosionsschutz. Im Salzsprühtest nach DIN 50 021 werden Werte bis zu 1 000 Stunden erreicht.

Der elektrochemische Wirkungsgrad ist hoch ; das elektrochemische Äquivalent beträgt 5 bis 20 Coulomb (C) je Gramm abgeschiedenen Überzuges.

Es wurde ferner gefunden, daß die Oberfläche des eingebrannten Überzuges so glatt ist, daß eine einzige Decklackschicht ausreicht, um eine Lackierung mit gutem Aussehen zu erreichen.

Das Reaktionsprodukt aus epoxidgruppenfreien Mannich-Basen und Epoxidharzen liegt in der erfindungsgemäßen wäßrigen Dispersion in protonisierter Form vor und dient als Trägerharz für die feinteiligen nicht ionischen Kunststoffe. Es wird im folgenden Text als « Trägerharz » bezeichnet. Protonisiert wird das Trägerharz mit geeigneten anorganischen und/oder organischen Säuren, vorzugsweise wasserlöslichen Carbonsäuren und ist in protonisierter Form in Wasser löslich oder

dispergierbar, bzw. mit Wasser mischbar und verdünnbar. Der pH-Wert der wäßrigen Lösung oder wäßrigen Dispersion wird auf einen Wert zwischen 7 und höchstens 9 eingestellt.

Geeignete Säuren sind praktisch alle bekannten anorganischen und organischen Säuren, wie z. B. Salzsäure, Schwefelsäure, Phosphorsäure, Kohlensäure, p-Toluolsulfonsäure, Essigsäure, Propionsäure, Ameisensäure, Zitronensäure, Milchsäure, Äpfelsäure, Fumarsäure, Maleinsäure, Phthalsäure, sowie die Halbester der Fumarsäure, Maleinsäure und Phthalsäure mit einwertigen oder mehrwertigen aliphatischen Alkoholen, wie Methanol, Äthanol, Propanol, Äthylenglykol.

Die besten Ergebnisse werden erhalten mit Essigsäure, Milchsäure und Ameisensäure, die deshalb als bevorzugt geeignete Protonisierungsmittel vorgeschlagen werden.

Das Trägerharz findet seine bevorzugte Verwendung in Überzugsmitteln für die kathodische Elektrotauchlackierung elektrisch leitfähiger Substrate, z. B. von Metallteilen aus Aluminium, Messing, Kupfer, Eisen, Stahl und Eisenlegierungen mit anderen Metallen, die gegebenenfalls chemisch vorbehandelt, z. B. phosphatiert sind.

Die Herstellung des protonisierten Reaktionsproduktes aus epoxidgruppenfreien Mannich-Basen und Epoxidharzen ist aus der DE-OS 2 751 499 bekannt und wird hier nicht beansprucht.

Zur zweifelsfreien Kennzeichnung des Reaktionsproduktes ist jedoch zu den einzelnen Komponenten folgendes zu sagen :

Die Herstellung der epoxidgruppenfreien Mannich-Basen (a) erfolgt aus

($a_1$) äthergruppenfreien kondensierten Phenolen mit mindestens zwei aromatischen Ringen und mindestens zwei phenolischen Hydroxylgruppen und/oder

($a_2$) äthergruppenhaltigen kondensierten Phenolen mit mindestens zwei aromatischen Ringen und mindestens einer phenolischen Hydroxylgruppe,

($a_3$) sekundären Aminen mit mindestens einer Hydroxyalkylgruppe, gegebenenfalls im Gemisch mit

($a_4$) sekundären Dialkyl- oder Dialkoxyalkylaminen ohne freie Hydroxylgruppen,

($a_5$) Formaldehyd oder Formaldehyd abspaltende Verbindungen.

Als äthergruppenfreie kondensierte Phenole mit mindestens zwei aromatischen Ringen und mindestens zwei phenolischen Hydroxylgruppen ($a_1$) kommen als besonders geeignet in Frage kondensierte Phenole der allgemeinen Formel

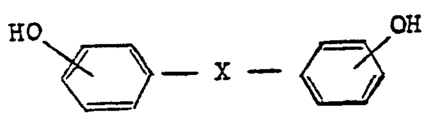

wobei die Hydroxylgruppen in ortho- oder para-Stellung zu X stehen und X ein geradkettiger oder verzweigter, zweiwertiger aliphatischer Rest mit 1 bis 3 Kohlenstoffatomen oder $SO_2$, SO oder $CH_2-\underset{R}{N}-CH_2$ (mit R = Alkylrest mit 1 bis 6 C-Atomen) ist ; vorzugsweise geeignet ist Bisphenol A. Auch niedrigmolekulare Umsetzungsprodukte aus Phenolen mit Formaldehyd, sogenannte Novolake können eingesetzt werden.

Gegebenenfalls können im Gemisch mit den kondensierten Phenolen ($a_1$) oder auch anstelle dieser weitere kondensierte Phenole ($a_2$) verwendet werden, die mindestens eine phenolische Hydroxylgruppe und darüber hinaus noch eine oder mehrere Äthergruppen im Molekül enthalten. Diese Produkte besitzen die allgemeine Formel

$$HO—B—[O—E—O]_n—H$$

bzw.

$$HO—B—[O—E—O]_n—P$$

wobei B für den Rest

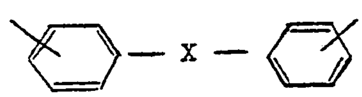

steht und X die oben angegebene Bedeutung hat, E für einen Hydroxylgruppen enthaltenden, durch Addition einer Epoxidverbindung an eine phenolische Hydroxylgruppe erhaltenen Rest, P für einen Phenyl- oder Alkylphenylrest, sowie n für eine ganze Zahl von 1 bis 3 steht, und wobei als Epoxidverbindungen (für E) bevorzugt Epoxidharze, wie z. B. Diglycidyläther von Bisphenol A, Pentaerythrit, Glycerin, Trimethylolpropan, Glykol, Glykoläther und anderer mehrwertiger, vorzugsweise zwei- bis vierwertiger Alkohole eingesetzt werden.

Sollen die kondensierten Phenole ($a_2$) allein verwendet werden, so nimmt man zweckmäßigerweise solche auf Basis von Tri- oder Tetraglycidyläthern.

Andere geeignete Verbindungen mit Epoxidgruppen sind stickstoffhaltige Diepoxide, wie sie in der US-PS 3 365 471 beschrieben sind, Epoxidharze aus 1,1-Methylen-bis-(5-substituiertem Hydantoin) nach der US-PS 3 391 097, Diepoxide aus Bisimiden nach US-PS 3 450 711, epoxylierte Aminomethyl-diphenyloxide nach US-PS 3 312 664, heterocyclische N,N'-Diglycidylverbindungen nach US-PS 3 503 979, Aminoepoxyphosphate nach GB-PS 1 172 916 oder 1,3,5-Triglycidylisocyanurate.

Besonders bevorzugt als Komponente $a_2$) sind die Phenolgruppen enthaltenden, praktisch epoxidgruppenfreien Umsetzungsprodukte von Diglycidyläthern des Bisphenol A oder mehrwertiger aliphatischer Alkohole, wie Pentaerythrit, Trimethylolpropan und Glycerin, mit Bisphenol A und gegebenenfalls Phenol. Solche Produkte weisen im allgemeinen Molekulargewichte von 650 bis 1 300 und Epoxidwerte von 0,004 bis 0,01 auf und können beispielsweise bei Temperaturen zwischen 160 und 180 °C, bei Anwesenheit von Reaktionskatalysatoren bei entsprechend niedrigeren Temperaturen, hergestellt werden.

Die kondensierten Phenole ($a_2$) enthalten aliphatisch gebundene Hydroxylgruppen. Zum Teil entstehen diese aus den Epoxidgruppen der Epoxidharze (E) bei deren Umsetzung mit den Bisphenolen (B) bzw. mit den Phenolen (P). Hydroxylgruppen können aber auch schon in den Epoxidharzen selbst enthalten sein, wenn diese durch Umsetzung von mehr als zweiwertigen Alkoholen (z. B. Pentaerythrit, Trimethylolpropan oder Glycerin) mit 2 Mol Epichlorhydrin hergestellt wurden.

Für den an sich bevorzugten Fall, daß Gemische der Komponenten ($a_1$) und ($a_2$) eingesetzt werden, liegt das Gewichtsverhältnis der beiden Komponenten zwischen 1 : 0,1 und 1 : 5.

Als sekundäre Amine ($a_3$), die mindestens eine Hydroxylalkylgruppe enthalten, eignen sich beispielsweise Alkyläthanolamine oder Alkylisopropanolamine mit 1 bis 6 Kohlenstoffatomen in der Alkylgruppe. Bevorzugt sind jedoch Dialkanolamine von Alkoholen mit 2 bis 6 Kohlenstoffatomen, insbesondere Diäthanolamin sowie Gemische dieser Dialkanolamine mit Alkylalkanolaminen.

Die sekundären Amine ($a_3$), die in den Mannich-Basen (a) als Dialkanolaminomethylgruppen und Alkylalkanolaminomethylgruppen eingebaut sind, sind für den Grad der Dispergierbarkeit der Bindemittel in dem gewünschten pH-Bereich von 6,0 bis 10,2 und für die Vernetzung des Systems von wesentlicher Bedeutung.

Als sekundäre Dialkyl- oder Dialkoxyalkylamine ($a_4$), die zusammen mit den hydroxyalkylgruppenhaltigen Aminen ($a_3$) für die Herstellung der Mannich-Basen eingesetzt werden, eignen sich solche der allgemeinen Formel

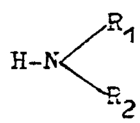

wobei $R_1$ und $R_2$ gleich oder verschieden sind und für einen geradkettigen oder verzweigten aliphatischen Rest mit 2 bis 10 Kohlenstoffatomen, der gegebenenfalls Alkoxygruppen enthält, stehen. Derartige geeignete sekundäre Amine sind beispielsweise Di-n-butylamin, Di-n-propylamin, Diisopropylamin, Di-n-pentylamin, Di-n-hexylamin, Di-n-octylamin, Di-2-äthylhexylamin und Di-2-alkoxyäthylamine, wie z. B. Di-2-methoxy-, Di-2-äthoxy- oder Di-2-tutoxyäthylamin sowie solche, in denen $R_1$ und $R_2$ zu einem Ring verknüpft sind, wie z. B. Morpholin oder Piperidin.

Bevorzugt geeignet sind Di-n-butylamin, Di-2-äthylhexylamin und Di-n-hexylamin. Die Wirkungsweise dieser sekundären Amine ($a_4$) liegt vornehmlich in der Beeinflussung der Stabilitätseigenschaften der Bindemittel, außerdem tragen sie zum Verlauf und zur « inneren Weichmachung » der aus den Bindemitteln hergestellten Lackschichten bei. Sie leisten auch einen gewissen Beitrag zur Vernetzung.

Die sekundären Amine können unter anderem, bedingt durch ihre Herstellungsweise, auch Anteile entsprechender primärer Amine enthalten, doch sollte deren Anteil 20 Gewichtsprozent des sekundären Amins nicht übersteigen. Das Gewichtsverhältnis der Komponente ($a_3$) und ($a_4$) kann zwischen 1 : 10 und 1 : 0,1, vorzugsweise zwischen 1 : 2 und 2 : 1 liegen.

Als Formaldehyd bzw. Formaldehyd liefernde Verbindungen ($a_5$) werden wäßrige oder alkoholische, wie z. B. butanolische Formaldehydlösungen oder Paraformaldehyd oder deren Gemische verwendet.

Die Herstellung der Mannich-Basen (a) erfolgt nach den üblichen, in der Literatur angegebenen Methoden (vgl. z. B. Houben-Weyl, Methoden der organischen Chemie, Band XI/1, Seite 731 (1957)), vorzugsweise durch Umsetzung bei Temperaturen zwischen 20 und 80 °C. Die Verhältnisse der eingesetzten Ausgangsstoffe richten sich nach den jeweils angestrebten Eigenschaften, wobei das Molverhältnis der Komponenten ($a_1$) und ($a_2$) zu den Komponenten ($a_3$) und ($a_4$) bevorzugt 1 : 0,75 bis 1 : 3 ist. Im allgemeinen wird aber auf jede phenolische Hydroxylgruppe etwa ein Mol sekundäres Amin eingesetzt. Die Menge an ($a_5$) beträgt mindestens ein Mol, bezogen auf ein Mol sekundäres Amin.

Die epoxidgruppenfreien Mannich-Basen (a) werden in einer Menge von 50 bis 90, vorzugsweise 60 bis 80 Gewichtsprozent, mit 5 bis 50, vorzugsweise 10 bis 30 Gewichtsprozent Epoxidharz — Komponente (b) — umgesetzt. Die Reaktion der Komponente (a) mit der Komponente (b) erfolgt im allgemeinen bei Temperaturen von 20 bis 100 °C, vorzugsweise 60 bis 80 °C, gegebenenfalls in Gegenwart von organischen Lösungsmitteln wie z. B. Alkoholen, Glykoläthern und Ketonen. Das erhaltene Reaktionsprodukt ist im wesentlichen epoxidgruppenfrei.

Die Umsetzung von (a) mit (b) zum Reaktionsprodukt ist im den Patentanmeldungen Dt-OS 2 419 179, Dt-OS 2 320 301, Dt-OS 2 357 075, Dt-OS 2 541 801, Dt-OS 2 554 080 und US-A-4 134 932 beschrieben.

Als Epoxidharze (Komponente b) kommen vorzugsweise Polyepoxid-Verbindungen mit 2 bis 3 Epoxidgruppen im Molekül in Frage, wie z. B. Umsetzungsprodukte von mehrwertigen Phenolen, besonders solchen der unter ($a_1$) erwähnten Formel

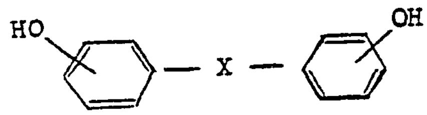

mit Epichlorhydrin ; aber auch die oben erwähnten Reaktionsprodukte von mehrwertigen Alkoholen, wie z. B. Pentaerythrit, Trimethylolpropan oder Glycerin mit Epichlorhydrin ; weiterhin epoxidgruppenhaltige Umsetzungsprodukte von Epoxidharzen mit sekundären Aminen oder hydroxylgruppenhaltigen Glykoläthern ; ferner Epoxidharze, die Heteroatome, wie Schwefel, eingebaut enthalten.

Die Epoxidharze (b) enthalten im allgemeinen ebenfalls aliphatisch gebundene Hydroxylgruppen, insbesondere wenn bei der Umsetzung des mehrwertigen Alkohols eine Kondensation zu höhermolekularen Produkten eingetreten war.

Ein Teil der aliphatisch gebundenen Hydroxylgruppen aus (a) oder (b) kann gegebenenfalls in Urethangruppen umgewandelt werden. Die Reaktion der Hydroxylgruppen mit den teilblockierten Polyisocyanaten kann in jedem beliebigen Stadium der Herstellung der Bindemittel erfolgen ; bevorzugt werden die Epoxidharze umgesetzt. Dies kann sowohl mit den Epoxidharzen geschehen, welche die Komponente (b) darstellen als auch mit den Epoxidharzen (E), welche zur Herstellung der Komponente ($a_2$) eingesetzt werden. Ferner ist es möglich, die fertige Komponente ($a_2$) direkt mit dem teilblockierten Polyisocyanat zur Reaktion zu bringen. Werden Epoxidharze auf Basis mehrwertiger aliphatischer Alkohole, z. B. Pentaerythrit, verwendet, dann erfolgt der Angriff des Isocyanats bevorzugt an der freien primären Alkoholgruppe, erst in zweiter Linie reagiert die sekundäre Alkoholgruppe, die aus dem Epoxidring gebildet worden war.

Phenolische Hydroxylgruppen bleiben unter den gewählten Bedingungen im wesentlichen erhalten. Auch eventuell vorhandene Amino- oder Imino-gruppen können mit den teilblokkierten Polyisocyanaten reagieren, was in manchen Fällen erwünscht sein kann.

Die Reaktion wird üblicherweise bei Temperaturen von 50 °C bis 120 °C, vorzugsweise von 70 °C bis 100 °C vorgenommen, wobei übliche Katalysatoren für die Polyurethan-Bildung, wie z. B. Dibutylzinndilaurat, anwesend sein können. Es wird in Abwesenheit von polaren Lösungsmitteln gearbeitet ; vorzugsweise wird die Umsetzung in der Schmelze vorgenommen, es können jedoch auch inerte Verdünnungsmittel zugegen sein.

Als teilblockierte Polyisocyanate sind aromatische Diisocyanate, wie Toluylendiisocyanate oder Xylylendiisocyanate oder deren Dimere und Trimere besonders geeignet. Es können jedoch auch aliphatische Diisocyanate, wie Hexamethylendiisocyanat, verwendet werden ; außerdem Präpolymere, die durch Umsetzung von Polyolen oder Polyätherpolyolen mit einem Überschuß an Polyisocyanaten hergestellt werden. Als Blockierungsmittel kommen bevorzugt aliphatische Alkohole in Frage, die geradkettig, verzweigt oder ringförmig vorliegen können, wie z. B. Methanol, Äthanol, n-, iso- oder tert.-Butanol, Hexanol, Äthylhexanol, Furfurylalkohol, Cyclohexanol, Alkylglykole, Alkyldiglykole, und Alkyltriglykole. Aber auch andere bekannte Blockierungsmittel, wie Oxime, Lactame, Ketone oder Malonester können verwendet werden.

Es ist ohne weiteres möglich, nur einen Teil der Mannich-Basen (a) bzw. der Epoxidharze (b) mit Polyisocyanaten zu modifizieren : Sei es, daß nebeneinander Epoxidverbindungen mit und ohne aliphatische Hydroxylgruppen vorliegen, sei es, daß nach erfolgter Umsetzung mit Polyisocyanat weitere, unmodifizierte Epoxidverbindungen zugegeben werden.

Die Mengenverhältnisse bei der Reaktion mit den teilblockierten Polyisocyanaten werden bevorzugt so gewählt, daß auf ein Mol basischen Stickstoff im fertigen Reaktionsprodukt 0,01 bis 1,0, vorzugsweise 0,05 bis 0,5 Mol Urethangruppen kommen, wobei sowohl die Urethanbindung zwischen Reaktionsprodukt und Polyisocyanat als auch diejenige zwischen Blockierungsmittel und Polyisocyanat gerechnet wird. Der gesamte Aufbau des Reaktionsproduktes erlaubt nach seiner Protonisierung mit Säuren als Trägerharz zu gewährleisten, daß feinteilige nicht ionische Kunststoffe in ihm so verteilt werden können, daß bei einem pH-Wert von über 7 stabile wäßrige Dispersionen entstehen, aus denen die kathodische Abscheidung der Überzüge bei diesen pH-Werten zwischen 7 und 9 vorgenommen werden kann.

Das Trägerharz ist in seiner protonisierten Form mit Wasser verdünnbar. Nach Bedarf können zusätzliche Lösungsmittel, die aber so ausgewählt sein müssen, daß sie den feinteiligen nicht ionischen Kunststoff weder anlösen noch anquellen, mit enthalten sein, wie beispielsweise Alkohole, wie Isopropanol, Propanol, Butanol, Glykole, Glykoläther, wie Äthylenglykol, Propylenglykol, Äthylenglykol-mono-äthyläther, Äthylenglykol-mono-propyläther, Äthylenglykol-mono-butyläther oder auch andere wie Tetrahydrofuran, aliphatische und/oder aromatische Kohlenwasserstoffe, Ester, Äther, Ätherester, um die

Lösungseigenschaften und Dispergiereigenschaften des Trägerharzes günstig zu beeinflussen.

Ein wichtiges Merkmal der Erfindung ist es, daß die wäßrige Dispersion als feinteilige Kunststoffe nicht ionische Kunststoffe eindispergiert enthält. Die feinteiligen nicht ionischen Kunststoffe werden im folgenden Text als « Kunststoffpulver » bezeichnet. Sie haben in der Form der Pulverlacke bereits Eingang in die Lackierung von Metallobjekten gefunden. Diese Kunststoffpulver sind bei Raumtemperatur bis zu Temperaturen von 100 °C fest und gut mahlbar. Sie sind nicht reaktiv in der Art, daß sie bereits bei Raumtemperatur mit sich selbst oder mit anderen verträglichen Harzen, wie dem kationischen Trägerharz, zu hochmolekularen Stoffen verfilmen. Bei den üblichen Einbrennbedingungen, die bei etwa 160 °C liegen, schmelzen sie jedoch und verbinden sich mit dem kationischen Trägerharz auf dem beschichteten Substrat zu einem verträglichen Film.

Als feinteilige nicht ionische Kunststoffe eignen sich im Rahmen dieser Erfindung Kunststoffpulver aus der Gruppe der Epoxidharze, Polyesterharze, Acrylatharze, Polyurethanharze, Polyamidharze, Polyäthylen, Polypropylen und Celluloseacetobutyrate. Diese Kunststoffpulver sind sämtlich bekannt und zum größten Teil handelsüblich.

Sämtliche Pulver dieser Art sind in der erfindungsgemäßen wäßrigen Dispersion einsatzfähig, vorausgesetzt, daß sie mit dem Trägerharz verträglich sind. Eine Unverträglichkeit läßt sich leicht daran erkennen, daß sich der Überzug beim Einbrennen in zwei Schichten trennt.

Das Kunststoffpulver kann in dieser Form in der wäßrigen Dispersion dispergiert sein. Es ist aber auch möglich, ein Kunststoffpulver zu verwenden, das Füllstoffe enthält. In diesem Fall sind die Pigmente und/oder Füllstoffe bei der Herstellung des Kunststoffpulvers bereits in dieses miteingearbeitet worden. Die wäßrige Dispersion kann dann selbst frei von Pigmenten sein.

Die erfindungsgemäße wäßrige Dispersion ist nicht allein darauf beschränkt, daß sie nur ein einziges nicht ionisches synthetisches Harz enthält.

Es können auch Gemische von zwei und mehr verschiedenen Kunststoffpulvern enthalten sein. Hierbei kann das eine oder andere Kunststoffpulver Pigmente und/oder Füllstoffe enthalten, das andere aber frei von diesen Zusatzstoffen sein.

Die zum Einsatz gelangenden Kunststoffpulver können außer den Pigmenten und Füllstoffen noch geringe Mengen von Härtungsmitteln und andere Zusatzstoffe, die das Fließverhalten des Pulvers während des Einbrennens regulieren, enthalten. Diese in das Kunststoffpulver eingearbeiteten Zusätze können in ihrer Wirkung nicht durch die wäßrige Dispersion negativ beeinflußt werden.

Wie in anderen Überzugsmitteln üblich, kann die wäßrige Dispersion ebenfalls elektrophoretisch abscheidbare Hilfsstoffe enthalten, wie beispielsweise Pigmente, Füllstoffe, Härtungskatalysatoren, Mittel zur Verbesserung des Verlaufs, Antischaummittel, Haftverbesserungsmittel und andere.

Für die Verwendung der wäßrigen Dispersion zum Herstellen von Einbrennüberzügen auf der Oberfläche von als Kathode geschalteten elektrisch leitfähigen Substraten durch kathodische Abscheidung aus einem Tauchbad in einem kathodischen Elektrotauchlackierverfahren ist das Verhältnis zwischen Trägerharz und Kunststoffpulver, außerdem die durchschnittliche Teilchengröße des Kunststoffpulvers für die Qualität des abgeschiedenen Überzuges von Bedeutung.

Bei der kathodischen Abscheidung werden die besten Ergebnisse erhalten, wenn auf 1 Gewichtsteil Trägerharz 0,1 bis 100 Gewichtsteile Kunststoffpulver, bevorzugt 0,5 bis 10 Gewichtsteile Kunststoffpulver, bezogen auf das pigment- und füllstoffreie Pulver, kommen.

Zusätzlich sind in der wäßrigen Dispersion neben dem Trägerharz und dem Kunststoffpulver noch 0 bis 10 Gewichtsteile Pigmente und/oder Füllstoffe, bevorzugt 2 bis 5 Gewichtsteile, enthalten.

Eine wichtige Rolle spielt die Teilchengröße des Kunststoffpulvers. Das Kunststoffpulver soll eine Korngrößenverteilung besitzen, bei der mindestens 95 % der Teilchen kleiner als 30 μm sind. Die besten Ergebnisse werden erhalten und darum bevorzugt sind solche Kunststoffpulver, bei denen mindestens 95 % der Teilchen kleiner als 10 μm sind. Es wurde gefunden, daß die Teilchen des Kunststoffpulvers mit abnehmender Größe besser von dem Trägerharz umhüllt werden. Aus diesem Grunde ist die kathodische Abscheidung von feineren Korngrößen gleichmäßiger und einfacher.

Die Herstellung der wäßrigen Dispersion erfolgt nach den in der Lackindustrie bekannten Methoden. So kann das Kunststoffpulver mittels einer hochtourigen Dispergiermaschine direkt in die wäßrige Lösung oder Dispersion des protonisierten Trägerharzes eingerührt werden. Eine andere Möglichkeit besteht darin, das Kunststoffpulver zusammen mit den gewünschten Pigmenten und/oder Füllstoffen in einer Kugelmühle oder einer Rührwerksmühle gemeinsam in die wäßrige Lösung des protonisierten Trägerharzes einzuarbeiten.

Eine weitere Möglichkeit der Herstellung der wäßrigen Dispersion besteht darin, eine wäßrige Aufschlämmung eines Kunststoffpulvers direkt in die wäßrige Lösung des Trägerharzes einzumischen. Bei dieser Methode entfällt das aufwendige Vermahlen mittels Sandmühle, Dreiwalze oder Rührwerksmühle.

Um die Herstellung der wäßrigen Dispersion zu erleichtern, kann die Einarbeitung der festen Komponente in Gegenwart geringer Mengen von Emulgatoren erfolgen.

Geeignet sind beispielsweise solche nichtionischer Art vom Typ der Äthylenoxidaddukte verschiedener Kettenlänge, wie z. B. mit Äthylenoxid modifizierte Alkylphenole, z. B. das tertiäre Octylphenol, das mit 5 bis 40 Äthylenoxideinheiten modifiziert ist. Außerdem mit Äthylenoxid modifizierte höhere aliphatische Alkohole wie z. B. Laurylalkohole mit 15 bis 50 Äthylenoxideinheiten sowie ähnlich

modifizierte langkettige Mercaptane, Fettsäuren oder Amine. Bevorzugt werden Gemische aus mindestens zwei Äthylenoxidaddukten, deren Äthylenoxideinheiten verschiedene Werte aufweisen. Die Badstabilität und die Eigenschaften des Überzuges werden durch die Zusatzstoffe nicht wesentlich beeinflußt.

Geeignet sind außerdem kationische Emulgatoren, wie z. B. niedermolekulare OH-gruppenhaltige Aminoverbindungen, die mit organischen oder anorganischen Säuren protonisiert sind.

Die Mengen an Emulgatoren sollen 0,1 Gewichtsteile, bezogen auf die Menge des Trägerharzes, nicht übersteigen.

Die erfindungsgemäße wäßrige Dispersion ist bevorzugt geeignet für die kataphoretische Abscheidung eines Überzuges auf einem elektrisch leitfähigen Substrat, das als Kathode in einem Elektrotauchlackierverfahren geschaltet ist.

Für die Durchführung der kathodischen Abscheidung wird die wäßrige Dispersion bis zu einem Festkörpergehalt zwischen 5 und 30 %, vorzugsweise zwischen 5 und 15 % mit Wasser herab verdünnt. Der pH-Wert liegt zwischen 7 und 9. Während der kathodischen Abscheidung wird die Dispersion bei Temperaturen zwischen 15 und 40 °C gehalten. Das zu beschichtende Substrat wird in die Dispersion eingetaucht und als Kathode geschaltet. Als Anode wird Graphit oder Edelmetall verwendet. Zwischen Kathode und Anode läßt man einen Gleichstrom durch das Bad fließen. Die Abscheidespannung beträgt 20 bis 400 Volt. Es scheidet sich hierbei auf der Kathode ein Überzug ab. Die Abscheidung wird durchgeführt, bis die gewünschte Schichtdicke erreicht ist. Ein besonderer Vorteil ist es, daß bereits nach kurzer Zeit Schichtdicken auf dem überzogenen Substrat bis zu 150 µm erhalten werden.

Je nach Wahl des Kunststoffpulvers genügen mitunter bereits 10 Sekunden, um diese Schichtdicken zu erhalten. Der Überzug wird nach dem Entfernen des Substrates aus dem Tauchbad mit Wasser abgespült und bei Temperaturen zwischen 160 °C und 200 °C innerhalb von 5 bis 30 Minuten eingebrannt.

Mitunter ist es zweckmäßig eine kurze Vortrocknung bei 100 °C vor dem Einbrennen vorzuschalten.

Es war überraschend, daß das Pulverharz sich zusammen mit dem Trägerharz auf der Kathode abscheidet.

Das war nicht zu erwarten, weil Dispersionen aus feinteiligem Pulverharz sich nicht elektrophoretisch abscheiden lassen.

Da das Elektrotauchbad während des Abscheidevorgangs sowohl an Trägerharz als auch an Kunststoffpulver verarmt, ist es notwendig, das Bad um diese Stoffe zu ergänzen, damit die ursprüngliche Zusammensetzung der wäßrigen Dispersion stets wieder vorhanden ist. Während des Abscheidevorgangs muß der pH-Wert stets bei 7 bis 9 gehalten werden.

Die Eigenschaften des eingebrannten Überzuges sind technologisch hervorragend. Die Korrosionsfestigkeit ist überraschend gut und variiert mit der Natur der festen Pulverlacke. Es wird unter Verwendung der erfindungsgemäßen wäßrigen Dispersion eine sehr hohe Schichtstärke erreicht, was allerdings den Umgriff etwas beeinträchtigt. Die eingebrannte Schicht kann ohne weiteres mit üblichen Lacken weiter lackiert werden. In den nachfolgenden Beispielen beziehen sich Prozentangaben auf Gewichtsprozent, Teile auf Gewichtsteile.

## Beispiel 1 (Herstellung eines Trägerharzes)

Zu 1 100 Teilen (4,8 Mole) Bisphenol A, 917,5 Teilen (8,7 Mole) Diäthanolamin, 332,5 Teilen (2,5 Mole) Di-2-methoxyäthylamin und 375 Teilen Isopropanol werden bei 20 bis 25 °C 984 Teile (13,1 Mole) Formalin 40 %ig zugetropft. Man läßt eine Stunde unter Stickstoff-Atmosphäre bei 30 °C rühren und erhitzt dann 3 Stunden auf 80°. Unter schwachem Vakuum werden Isopropanol und Wasser abdestilliert. Man erhält eine gelbe harzähnliche Masse mit einem Festgehalt von 91 %. Hiervon werden 2 542 Teile mit 70 Teilen Paraformaldehyd versetzt und 9 bis 10 Stunden bei 70 °C unter Stickstoff-Atmosphäre Kondensiert. Es wird eine Mannich-Base (Komponente a) in Form einer viskosen Masse mit einem Festgehalt von 90 % erhalten.

Hiervon werden 544 Teile der Mannich-Base mit 136,5 Teilen eines handelsüblichen Reaktionsproduktes aus Bisphenol A und Epichlorhydrin (Epoxidwert : 0,2) (Epoxidharz Epoxy 1/33 der Firma Chemapol) und 54,5 Teilen eines handelsüblichen Reaktionsproduktes aus Pentaerythrit und Epichlorhydrin (Epoxidwert : 0,57) (Epoxin 162, BASF AG) unter Verwendung von 34 Teilen Dimethylglykoläther 3 Stunden bei 60 °C zur Reaktion gebracht.

Man erhält ein klares viskoses Harz mit einem mittleren Molekulargewicht von 860 und einem Restformaldehydgehalt von 0,3 %. Der Festkörper beträgt 70 %.

## Beispiel 2 (Herstellung eines nichtionischen Kunststoffpulvers)

100 Teile eines Epoxidharzpulvers aus Bisphenol A und Epichlorhydrin mit einem Schmelzbereich von 70-75 °C nach Kofler, 3 Teile eines Verlaufsmittels, 20 Teile Titandioxid (Rutil-Typ), 8 Teile Aluminiumsilikat, 2 Teile Eisenoxidrot und 5 Teile eines Dicyandiamid-Derivates werden in einer Strangpresse in der für die Herstellung pulverförmiger Anstrichmittel üblichen Weise geschmolzen und zusammengeknetet. Das erstarrte Gemisch wird in einer Spiralstrahlmühle zu einem Pulver vermahlen,

mit einem maximalen Teilchendurchmesser von 30 µm und einem mittleren Teilchendurchmesser von 10 bis 15 µm.

Beispiel 3 (Herstellung eines nichtionischen Kunststoffpulvers)

A. 60 Teile eines pulverförmigen Polyesterharzes, 50 Teile eines Epoxidharzes aus Bisphenol A und Epichlorhydrin mit einem Schmelzbereich von 70-75 °C nach Kofler, werden in 290 Teilen Diacetonalkohol gelöst. Mittels eines hochtourigen Dispersers wird diese Lösung in Wasser eingerührt und das Harzgemisch ausgewählt. Das Präzipitat wird abfiltriert.

B. Der feuchte Filterkuchen wird mit Wasser gewaschen und in einem Trockenofen zu einem festen Pulver getrocknet, das anschließend in einer Spiralstrahlmühle durch Mahlen auf eine maximale Korngröße von 30 µm gebracht wird. 95 % des Pulvers hat eine mittlere Korngrößenverteilung zwischen 10 und 15 µm.

C. Der nach A. erhaltene feuchte Niederschlag wird mit Wasser gewaschen und erneut abfiltriert. Der Filterkuchen wird mit soviel Wasser zu einer homogenen Masse aufgeschlämmt, daß in dieser Masse ein Teil Kunstharzpulver und zwei Teile Wasser vorliegen. Die mittlere Korngrößenverteilung des Pulvers beträgt 5 bis 10 µm, die maximale Korngröße liegt bei 30 µm.

Beispiel 4

100 Teile des nach Beispiel 1 hergestellten Trägerharzes werden mit zwei Teilen Essigsäure protonisiert und in 800 Teilen vollentsalztem Wasser dispergiert. Zu dieser Klarlackdispersion werden 100 Teile des nach Beispiel 3 B erhaltenen Kunststoffpulvers unter gutem Rühren zugegeben.

Die Dispersion wird auf einen Festkörpergehalt von 12 % eingestellt und besitzt einen pH-Wert von 7,6.

Die Leitfähigkeit beträgt 0,7 mS/cm bei 25 °C.

In diese Dispersion wird ein phosphatiertes Stahlblech getaucht und als Kathode geschaltet. Ein eingetauchtes Edelstahlblech wird als Anode geschaltet.

Bei Anlegen eines Gleichstromes mit einer Spannung von 250 Volt und einer Badtemperatur von 24 °C wurde auf dem Kathodenblech innerhalb von 20 Sekunden ein Überzug abgeschieden. Nach dem Herausnehmen des mit dem Überzug versehenen Bleches und Abspülen mit vollentsalztem Wasser wird 20 Minuten bei 185 °C eingebrannt. Es entsteht ein geschlossener Film von 40 bis 50 µm Schichtdicke auf der der Anode zugewandten Blechseite. Bei der Korrosionsschutzprüfung nach DIN 50 021 war der Film nach 1 000 Stunden noch in Ordnung.

Beispiel 5

100 Teile des nach Beispiel 1 hergestellten Trägerharzes werden mit zwei Teilen Essigsäure protonisiert und in 800 Teilen vollentsalztem Wasser dispergiert. Zu dieser Klarlackdispersion werden 200 Teile des nach Beispiel 2 erhaltenen Kunststoffpulvers unter gutem Rühren zugegeben.

Die Dispersion wird auf ein Festkörpergehalt von 12 % eingestellt und besitzt einen pH-Wert von 7,6.

Die Leitfähigkeit beträgt 0,7 mS/cm bei 25 °C.

In diese Dispersion wird ein phosphatiertes Stahlblech getaucht und als Kathode geschaltet. Ein eingetauchtes Edelstahlblech wird als Anode geschaltet.

Bei Anlegen eines Gleichstromes mit einer Spannung von 200 Volt und einer Badtemperatur von 24 °C wurde auf dem Kathodenblech innerhalb von 30 Sekunden ein Überzug abgeschieden. Nach dem Herausnehmen des mit dem Überzug versehenen Bleches und Abspülen mit vollentsalztem Wasser wird 20 Minuten bei 185 °C eingebrannt. Es entsteht ein geschlossener Film von 80 µm Schichtdicke auf der der Anode zugewandten Blechseite. Bei der Korrosionsprüfung nach DIN 50 021 war der Film nach 1 000 Stunden noch in Ordnung.

Beispiel 6

100 Teile des nach Beispiel 1 erhaltenen Trägerharzes werden mit 10 Teilen Titandioxid (Rutil-Typ), 8 Teilen Aluminiumsilikat, 2 Teilen Eisenoxidrot, 1 Teil Essigsäure, 600 Teilendes nach Beispiel 3 C erhaltenen Kunststoffpulverschlammes, 10 Teilen Butanol in einer Kugelmühle mit Porzellankugeln 72 Stunden gemahlen. Danach wird mit Wasser auf einen Festkörpergehalt von 12 % eingestellt und die erhaltene wäßrige Dispersion analog dem Beispiel 4 kathodisch abgeschieden. Die Abscheidespannung betrug 150 Volt, die Abscheidezeit 40 Sekunden. Nach dem Einbrennen wurde auf der der Anode zugewandten Blechseite eine Schichtdicke von 80 µm erzielt.

Der eingebrannte Film wurde geschliffen und ein Alkydharz-Melaminharz — Einbrenndecklack im Spritzverfahren aufgetragen und 20 Minuten bei 140 °C eingebrannt. Die Erichsen-Tiefung der gesamten Lackierung betrug 10,3 mm, Gitterschnitt 0, die Beständigkeit gegen Salzprühnebel nach DIN 50 021 betrug 0 mm nach 720 Stunden.

Beispiel 7

Das Beispiel 5 wurde wiederholt mit dem Unterschied, daß zusätzlich zu dem Trägerharz noch zwei Teile eines Octyl-Nonyl-Phenoxyäthanol-Emulgators (Triton 405, der Firma Rohm & Haas Company, Philadelphia, USA) zugegeben wurden.

Das Kunststoffpulver wurde dann eingerührt in das den Emulgator enthaltene Gemisch.

Die erhaltenen Ergebnisse entsprachen denen des Beispiels 5.

Beispiel 8

In die nach Beispiel 5 hergestellte Dispersion mit einem Festkörpergehalt von 12 % und einem pH-Wert von 7,6 wird ein Stahlblech zur Hälfte eingetaucht und über einen Kontakt geerdet. Die Dispersion wird gleichmäßig gerührt und nach 20 Tagen sind an dem Stahlblech keine Korrosions- bzw. Rosterscheinungen festzustellen, und zwar weder an dem eingetauchten Teil noch an dem nicht eingetauchten Teil.

In einem Vergleichsversuch wurde das Beispiel 1 der DE-AS 2 248 836 nachgearbeitet und gemäß diesem Beispiel auf einen Festkörpergehalt von 12 % verdünnt und auf einen pH-Wert von 4,4 bis 4,5 eingestellt. Auch in diese Dispersion wurde ein Stahlblech eingetaucht und die Dispersion ständig gerührt. Nach 5 Tagen zeigten sich auf dem Stahlblech Korrosionserscheinungen, und zwar als Lochfraß an dem in der Flüssigkeit eingetauchten Teil und als Rostbildung an dem oberhalb des Tauchbades befindlichen Teiles.

Durch diesen Versuch wird die Überlegenheit der erfindungsgemäßen Dispersion gegenüber einer solchen nach dem bekannten Stand der Technik nachgewiesen.

**Ansprüche**

1. Wäßrige Dispersion auf der Basis eines mit Säuren protonisierten Reaktionsproduktes von

a) epoxidgruppenfreien Mannich-Basen aus

($a_1$) äthergruppenfreien kondensierten Phenolen mit mindestens zwei aromatischen Ringen und mindestens zwei phenolischen Hydroxylgruppen und/oder

($a_2$) äthergruppenhaltigen kondensierten Phenolen mit mindestens zwei aromatischen Ringen und mindestens einer phenolischen Hydroxylgruppe,

($a_3$) sekundären Aminen mit mindestens einer Hydroxyalkylgruppe, gegebenenfalls im Gemisch mit

($a_4$) sekundären Dialkyl- oder Dialkoxyalkylaminen ohne freie Hydroxylgruppen,

($a_5$) Formaldehyd oder Formaldehyd abspaltende Verbindungen

mit

b) Epoxidharzen, wobei aus (a) und/oder (b) stammende aliphatische Hydroxylgruppen gegebenenfalls durch Umsetzung mit teilblockierten Isocyanaten mindestens teilweise in Urethangruppen überführt sind, dadurch gekennzeichnet, daß sie zusätzlich feinteilige nicht ionische Kunststoffe eindispergiert enthält.

2. Wäßrige Dispersionen nach Anspruch 1, dadurch gekennzeichnet, daß die wäßrige Lösung und/oder wäßrige Dispersion des mit Säuren protonisierten Reaktionsproduktes Pigmente und/oder Füllstoffe und/oder wassermischbare organische Lösungsmittel enthält.

3. Wäßrige Dispersion nach den Ansprüchen 1 oder 2, dadurch gekennzeichnet, daß die feinteiligen Kunststoffe Pigmente und/oder Füllstoffe enthalten.

4. Verwendung der wäßrigen Dispersion gemäß den Ansprüchen 1 bis 3 zum Herstellen von Einbrennüberzügen auf der Oberfläche von als Kathode geschalteten elektrisch leitfähigen Substraten durch kathodische Abscheidung aus einem Tauchbad in einem kathodischen Elektrotauchlackierverfahren.

5. Verfahren zur elektrophoretischen Abscheidung eines kationischen Kunstharzes zusammen mit einem feinteiligen nicht ionischen Kunststoff aus der wäßrigen Dispersion gemäß den Ansprüchen 1 bis 4 auf ein als Kathode geschaltetes elektrisch leitfähiges Werkstück, dadurch gekennzeichnet, daß man die Abscheidung aus einer wäßrigen Lösung und/oder wäßrigen Dispersion eines mit Säuren protonisierten Reaktionsproduktes von

a) epoxidgruppenfreien Mannich-Basen aus

($a_1$) äthergruppenfreien kondensierten Phenolen mit mindestens zwei aromatischen Ringen und mindestens zwei phenolischen Hydroxylgruppen und/oder

($a_2$) äthergruppenhaltigen kondensierten Phenolen mit mindestens zwei aromatischen Ringen und mindestens einer phenolischen Hydroxylgruppe,

($a_3$) sekundären Aminen mit mindestens einer Hydroxyalkylgruppe, gegebenenfalls im Gemisch mit

($a_4$) sekundären Dialkyl- oder Dialkoxy-alkylaminen ohne freie Hydroxylgruppen,

($a_5$) Formaldehyd oder Formaldehyd abspaltende Verbindungen

mit

b) Epoxidharzen, wobei aus (a) und/oder (b) stammende aliphatische Hydroxylgruppen gegebenenfalls durch Umsetzung mit teilblockierten Isocyanaten mindestens teilweise in Urethangruppen überführt sind, in der die feinteiligen nicht ionischen Kunststoffe dispergiert sind, bei einem pH-Wert zwischen 7 und 9 durchführt.

**Claims**

1. An aqueous dispersion based on a product, protonated with acids, from the reaction of

a) Mannich bases which are free from epoxide groups and are formed from

($a_1$) condensed phenols which are free from ether groups and contain at least two aromatic rings and at least two phenolic hydroxyl groups, and/or

($a_2$) condensed phenols which contain ether groups and contain at least two aromatic rings and at least one phenolic hydroxyl group,

($a_3$) secondary amines having at least one hydroxyalkyl group, if appropriate mixed with

($a_4$) secondary dialkylamines or dialkoxyalkylamines which do not contain free hydroxyl groups, and

($a_5$) formaldehyde or compounds which split off formaldehyde, with

b) epoxide resins, aliphatic hydroxyl groups originating from (a) and/or (b) being optionally converted, at least partially, into urethane groups by reaction with partially blocked isocyanates with the improvement that said aqueous dispersion contains additionally finely divided, non ionic plastics dispersed therein.

2. Aqueous dispersion as claimed in Claim 1, wherein the aqueous solution and/or aqueous dispersion of the reaction product which has been protonated with acids contains pigments and/or fillers and/or water-miscible organic solvents.

3. An aqueous dispersion as claimed in either of Claims 1 or 2, wherein the finely divided plastics contain pigments and/or fillers.

4. Use of the aqueous dispersion according to any one of Claims 1 to 3 for the production of stoved coatings on the surface of electrically conducting substrates, connected as the cathode, by cathodic deposition from a coating bath in a cathodic electrocoating lacquering process.

5. A process for the electrophoretic deposition of a cationic synthetic resin together with a finely divided, nonionic plastic from the aqueous dispersion according to any one of Claims 1 to 4 onto an electrically conducting material, connected as the cathode, wherein the deposition is carried out at a pH value between 7 and 9 from an aqueous solution and/or aqueous dispersion of a product, protonated with acids, from the reaction of

a) Mannich bases which are free from epoxide groups and are formed from

($a_1$) condensed phenols which are free from ether groups and contain at least two aromatic rings and at least two phenolic hydroxyl groups, and/or

($a_2$) condensed phenols which contain ether groups and contain at least two aromatic rings and at least one phenolic hydroxyl group,

($a_3$) secondary amines having at least one hydroxyalkyl group, if appropriate mixed with

($a_4$) secondary dialkylamines or dialkoxyalkylamines which do not contain free hydroxyl groups, and/or

($a_5$) formaldehyde or compounds which split off formaldehyde, with

b) epoxide resins, aliphatic hydroxyl groups originating from (a) and/or (b) being optionally converted, at least partially, into urethane groups by reaction with partially blocked isocyanates, in which the finely divided, nonionic plastics have been dispersed.

**Revendications**

1. Dispersion aqueuse à base d'un produit de réaction protonisé par des acides, provenant de la réaction entre

a) des bases de Mannich sans groupes époxydes issues :

($a_1$) de phénols condensés sans groupes éthers comportant au moins deux cycles aromatiques et au moins deux groupes hydroxyles phénoliques et/ou

($a_2$) de phénols condensés contenant des groupes éthers comportant au moins deux cycles aromatiques et au moins un groupe hydroxyle phénolique,

($a_3$) d'amines secondaires comportant au moins un groupe hydroxyle, éventuellement en mélange avec

($a_4$) des dialkylamines ou dialcoxyalkylamines secondaires sans groupes hydroxyles libres,

($a_5$) de formaldéhyde ou de composés dégageant du formaldéhyde et

b) des résines époxydes, les groupes hydroxyles aliphatiques provenant de (a) et/ou de (b) étant éventuellement au moins partiellement transformés en groupes uréthanes par transformation avec des

isocyanates partiellement bloqués, cette dispersion étant caractérisée par le fait qu'elle contient, additionnellement, incorporées en dispersion, des matières plastiques finement divisées.

2. Dispersions aqueuses suivant la revendication 1, caractérisées en ce que la solution aqueuse et/ou la dispersion aqueuse du produit de réaction protonisé par des acides contient des pigments et/ou des charges et/ou des solvants organiques miscibles avec l'eau.

3. Dispersion aqueuse suivant l'une des revendications 1 ou 2, caractérisée par le fait que les matières plastiques finement divisées contiennent des pigments et/ou des charges.

4. Utilisation de la dispersion aqueuse suivant les revendications 1 à 3, pour produire des revêtements à cuire sur la surface d'un substrat électro-conducteur connecté en cathode, par dépôt cathodique dans un bain d'immersion, dans un procédé cathodique de laquage électrolytique en immersion.

5. Procédé de dépôt électrophorétique d'une résine cationique synthétique avec une matière plastique non ionique finement divisée à partir de la dispersion aqueuse suivant les revendications 1 à 4, sur une pièce électro-conductrice connectée en cathode, caractérisé en ce qu'on exécute le dépôt à partir d'une solution aqueuse et/ou d'une dispersion aqueuse d'un produit de réaction protonisé par des acides, issu de la réaction entre

a) des bases de Mannich sans groupes époxydes issues :

($a_1$) de phénols condensés sans groupes éthers comportant au moins deux cycles aromatiques et au moins deux groupes hydroxyles phénoliques et/ou

($a_2$) de phénols condensés contenant des groupes éthers comportant au moins deux cycles aromatiques et au moins un groupe hydroxyle phénolique,

($a_3$) d'amines secondaires comportant au moins un groupe hydroxyle, éventuellement en mélange avec

($a_4$) de dialkylamines ou dialcoxyalkylamines secondaires sans groupes hydroxyles libres,

($a_5$) de formaldéhyde ou de composés dégageant de la formaldéhyde et

b) des résines époxydes, les groupes hydroxyles aliphatiques provenant de (a) et/ou de (b) étant éventuellement au moins partiellement transformés en groupes uréthanes par transformation avec des isocyanates partiellement bloqués, dans laquelle les matières plastiques non ioniques finement divisées sont dispersées, à un pH entre 7 et 9.